# FASCICULE DE BREVET EUROPEEN

(11) **EP 3 599 882 B1**
(45) Date de publication et mention de la délivrance du brevet: **25.11.2020**
(21) Numéro de dépôt: 18713955.5
(22) Date de dépôt: 29.03.2018
(51) Int. Cl.: A23J 1/12, A23J 1/14, A23J 3/30, A23J 3/34, A23L 33/18

(54) **PROTEINES VEGETALES HYDROLYSEES ADAPTEES A UNE UTILISATION EN ALIMENTATION INFANTILE**
FÜR BABYNAHRUNG GEEIGNETE HYDROLYSIERTE PFLANZENPROTEINE
HYDROLYSED VEGETABLE PROTEINS SUITABLE FOR USE IN BABY FOOD

(30) Priorité: 31.03.2017 FR 1752807
(43) Date de publication de la demande: 05.02.2020
(73) Titulaire: Compagnie Laitiere Europeenne, 50890 Conde-sur-Vire (FR)
(72) Inventeur: ERABIT, Nicolas, 35250 Saint Medard Sur Ille (FR); GUILLEMOT, Pierre, 35133 Laignelet (FR); GUERRIER, Jean-Louis, 35133 Fleurigne (FR)
(74) Mandataire: Gevers & Orès
(86) Numéro de dépôt international: PCT/EP2018/058150
(87) Numéro de publication internationale: WO 2018/178271

(56) Documents cités:
- WO-A1-92/15696
- ES-A1- 2 559 902
- US-A- 6 060 269

## Description

La présente invention se rapporte à un hydrolysat de protéines végétales ayant des caractéristiques adaptées à une utilisation en alimentation humaine et plus particulièrement en alimentation infantile. Ces caractéristiques sont obtenues par la mise au point des conditions optimales de conduite des étapes de procédé permettant de garantir la qualité du produit avec des rendements élevés.

Les enfants souffrant d'allergies aux protéines de lait de vache (APLV) doivent bénéficier d'une alimentation adaptée. Les sociétés proposant ces produits de nutrition infantile spécialisée recherchent des ingrédients de haute qualité adaptés à la réglementation. Parmi ces ingrédients, les hydrolysats de protéines végétales sont utilisés dans les formules infantiles destinées aux bébés souffrant d'APLV (préparations pour nourrissons, préparations de suite, desserts pour nourrissons et enfants en bas âge,...) et constituent généralement l'unique source d'azote de ces formules.

Ces hydrolysats de protéines végétales, en plus de garantir l'absence d'allergène laitier, doivent répondre aux exigences les plus strictes en terme de qualité (profil en acides aminés, teneur en minéraux,...) et de sécurité des aliments (charges microbiennes, teneur en contaminants chimiques tels que métaux lourds, nitrates, chlorates) permettant d'obtenir un produit fini sûr, conforme aux règlementations en vigueur.

C'est dans ce but que la Demanderesse est parvenue à préparer un hydrolysat de protéines végétales destiné à être utilisé à une concentration comprise entre 10 et 30% dans une formulation infantile ayant des teneurs en minéraux et contaminants inférieures aux exigences réglementaires ; cet hydrolysat a les caractéristiques suivantes :

**Tableau 1 : Composition souhaitée et teneurs maximales en contaminants indésirables dans un hydrolysat de protéines végétales destiné à l'alimentation infantile en tenant compte de la règlementation européenne en vigueur**

| ***Caractéristiques*** | ***Unité*** | ***Limites visées*** |
|---|---|---|
| Protéines/Matière azotée totale (N × 6,25) | g/100 g de matière sèche (MS) | > 60 |
| Protéines non hydrolysées/insolubles | % de protéines/matière azoté totale | < 10 |
| Sodium | mg/100 g | < 1200 |
| Potassium | mg/100 g | < 1500 |

| Chlorure | mg/100 g | < 1500 |
|---|---|---|
| Arsenic inorganique | µg/kg | < 50 |
| Cadmium | µg/kg | < 50 |
| Plomb | µg/kg | < 50 |
| Mercure | µg/kg | < 50 |
| Nitrates | mg/kg | < 50 |
| Chlorates | mg/kg | < 0,35 |

La teneur en protéines non hydrolysées est estimée grâce une mesure de l'azote non protéique (NPN pour « non proteic nitrogen », c'est-à-dire peptides, acides aminés, urée,...) correspondant à l'azote soluble dans 15% (poids/poids) d'acide trichloroacétique. La fraction de protéines non hydrolysées est calculée par la formule suivante : (NT - NPN) / NT (avec NT = azote total) et est exprimée en % du total de la matière azotée.

Les procédés d'obtention des hydrolysats de protéines végétales nécessitent l'utilisation de protéines végétales (protéines de soja, protéines de riz, protéines de pois,...) issues de matières premières qui peuvent être initialement contaminées en métaux lourds. De plus, ces procédés impliquent des ajustements de pH avec des solutions alcalines (NaOH, KOH, Ca(OH)₂,...) et des solutions acides (HCl, H₃PO₄,...). Ces ajustements apportent une quantité importante de minéraux (Na, K, Cl,...) et peuvent parfois apporter des contaminants (par exemple, chlorates). Enfin, l'eau utilisée tout au long de ces procédés peut être source de chlorates, de nitrates voire de pesticides. Toutes ces étapes représentent un risque d'apport de contaminants et entrainent le risque de compromettre l'utilisation des protéines végétales hydrolysées en alimentation infantile.

Par ailleurs, les procédés d'hydrolyse enzymatique ne permettent pas d'aboutir à une hydrolyse de toutes les protéines végétales, qui sont souvent insolubles dans la phase aqueuse. Pour améliorer la solubilité et la digestibilité de protéines végétales, il est préférable d'éliminer tout ou partie des protéines non hydrolysées/insolubles. Ainsi, une teneur en protéines hydrolysées plus importante améliorera les caractéristiques du produit fini et sera donc un critère déterminant pour le formulateur.

L'objectif de la présente invention est la mise au point d'un procédé permettant une modification de la composition des hydrolysats de protéines végétales destinée à les rendre utilisables en alimentation infantile grâce à : une réduction de la teneur en protéines non hydrolysées/insolubles, une réduction des teneurs en minéraux, une réduction des teneurs en métaux lourds et autres contaminants. Les cibles du tableau 1 sont données à titre indicatif mais toute modification permettant de se rapprocher de ces cibles est considérée comme une amélioration.

Des procédés de séparation peuvent, en théorie, être utilisés pour améliorer les caractéristiques des hydrolysats de protéines végétales :
- la séparation centrifuge permet d'éliminer les fractions de densité supérieure d'une solution. Cette technologie est classiquement utilisée pour éliminer les fractions insolubles d'une solution de protéines végétales hydrolysées. L'efficacité de la séparation centrifuge est étroitement liée aux conditions de sa mise en œuvre et aucun document bibliographique ne décrit les conditions optimales de mise en œuvre de la séparation centrifuge en aval de l'hydrolyse pour optimiser les rendements et améliorer la qualité du produit obtenu ;
- la nanofiltration est un procédé de filtration membranaire permettant de concentrer des solutions. Les membranes utilisées ont une forte perméabilité à l'eau, une perméabilité moyenne aux ions monovalents et une perméabilité très faible aux ions divalents. Ni la perméabilité aux métaux lourds et autres contaminants, ni les conditions optimales de conduite de la nanofiltration sur des solutions de protéines végétales hydrolysées n'ont été rapportées ;
- la diafiltration est réalisée sur un outil de filtration membranaire et consiste à diluer la solution, en général avec de l'eau, puis à la reconcentrer de manière à diminuer la concentration des espèces perméables tout en maintenant le niveau de concentration des espèces non perméables (ici, les hydrolysats de protéines végétales) ;
- l'électrodialyse est un procédé de déminéralisation fonctionnant avec des membranes perméables aux anions et des membranes perméables aux cations, l'application d'un champ électrique permet la migration des minéraux ;
- l'homogénéisation est un procédé dans lequel un traitement mécanique par haute pression dynamique est appliqué à un fluide. Ce type de traitement est susceptible de fragmenter des particules insolubles et d'améliorer leur solubilité ;
- les résines cationiques échangeuses d'ions sont des polymères permettant de modifier les concentrations en cations d'une solution. Il existe des résines avec une forte affinité pour le cadmium qui n'ont, à notre connaissance, pas été testées pour décontaminer des solutions de protéines végétales hydrolysées.

La Demanderesse a mis au point un nouveau procédé de préparation d'hydrolysat de protéines végétales qui combine plusieurs étapes de séparation dont l'optimisation des conditions de mise en œuvre permet une diminution améliorée de la teneur dudit hydrolysat en contaminants et rend cet hydrolysat utilisable pour l'alimentation infantile.

La Demande de Brevet Espagnol ES2559902 décrit un procédé d'obtention d'un hydrolysat de protéines végétales décontaminé en métaux lourds et mycotoxines. Outre une étape d'hydrolyse enzymatique des protéines végétales, ce procédé comprend une étape de séparation solide-liquide du mélange obtenu après hydrolyse ; l'étape de séparation solide-liquide peut être réalisée par divers moyens. Ce document illustre un mode de réalisation du procédé qui combine une séparation centrifuge conduite préalablement à l'hydrolyse enzymatique, cette hydrolyse est suivie d'une filtration, il ne mentionne cependant aucun des paramètres de conduite de ces étapes.

La Demande Internationale WO1992015696 décrit un procédé d'obtention d'un hydrolysat de protéines végétales proposant un rendement amélioré. Ce procédé comprend une étape de séparation centrifuge, une étape d'ultrafiltration puis une étape de nanofiltration. Les conditions (pH, température) de conduite ces différentes étapes de séparation ne sont pas précisées et ce document n'a pas pour objectif la préparation d'un hydrolysat de protéines végétales adapté à l'alimentation infantile.

Il s'avère cependant que la Demanderesse a constaté que la définition précise des paramètres de conduite du procédé de préparation d'un hydrolysat sont indispensables à la reproductibilité de ce procédé et surtout à l'obtention d'une réduction significative des contaminants et à la maitrise du profil minéral ; ces deux aspects sont indispensables pour l'utilisation de l'hydrolysat dans des préparations infantiles.

La présente invention se rapporte à un procédé de préparation d'un hydrolysat de protéines végétales consistant en les étapes suivantes :
a- préparation d'une suspension aqueuse de protéines végétales à une concentration comprise entre 2 et 50% (poids/poids) ;
   La mise en suspension des protéines végétales dans une solution aqueuse, préférentiellement de l'eau, se fait par hydratation d'une poudre de concentré ou isolat de protéines végétales. Dans ce qui suit, les termes « concentré » ou « concentrât » ont la même signification et sont employés indifféremment ; ils visent des préparations ayant une teneur en protéines végétales d'au moins 60% MAT/MS. Les « isolats » sont eux des préparations de protéines végétales à une teneur d'au moins 90% MAT/MS.
   Les concentrés ou isolats de protéines végétales peuvent notamment provenir de riz, de pois ou encore de soja.
   Le pH de la suspension de protéines végétales est ajusté à une valeur comprise entre 6 et 9 par une ou plusieurs solutions alcalines ; par exemple, il s'agit de solution de NaOH, KOH, Ca(OH)₂,... ; de préférence, il s'agit d'un mélange de NaOH et de KOH.
b- optionnellement, homogénéisation de la suspension aqueuse de protéines végétales préparée à l'étape a ;
   L'homogénéisation est un procédé classique connu de l'homme du métier ; un exemple de mise en œuvre d'une étape d'homogénéisation est décrit dans **l'Exemple 7.**
c- hydrolyse enzymatique de la suspension aqueuse de protéines végétales issue de la ou des étapes précédentes ;
   Cette étape peut être conduite par des techniques classiques connues de l'homme du métier, par exemple décrites dans la littérature (Hamada J.S. (2000). Characterization and Functional Properties of Rice Bran Proteins Modified by Commercial Exoproteases and Endoproteases. Journal of Food Science Vol. 65, No. 2,(305 - 310)> Qiang Zhao, Hua Xiong, Cordelia Selomulya, Xiao Dong Chen, Honglan Zhong, Shenqi Wang, Wenjing Sun, Qiang Zhou (2012). Enzymatic hydrolysis of rice dreg protein: Effects of enzyme type on the functional properties and antioxidant activities of recovered proteins. Food Chemistry 134 1360-1367).
   Une ou plusieurs protéases (par exemple, EC 3.4.24.28 ; EC 3.4.11.1 ; EC 3.4.23.18 ; EC 3.4.21.62 ; EC 3.4.24.28, EC 3.4.21.4,...) sont utilisées pour hydrolyser les protéines. En amont de l'ajout de l'enzyme, le pH et la température de la solution sont ajustés pour être dans des conditions adaptées à l'enzyme utilisée. Ces conditions de pH et température, tout comme la dose à ajouter et le temps d'hydrolyse, sont ajustés par l'homme du métier en fonction des propriétés de l'enzyme utilisée.
   Durant l'hydrolyse, le pH peut être ajusté constamment (méthode pH constant) ou non (pH libre).
   A la fin de l'hydrolyse, l'enzyme est inactivée par traitement thermique dans les conditions choisies par l'homme du métier en fonction des propriétés de l'enzyme utilisée.
   Cette étape du procédé permet d'obtenir une solution/suspension de protéines végétales hydrolysées dont les caractéristiques ne sont pas adaptées à une utilisation en alimentation infantile (voir l'**Exemple 1**), car cette solution/suspension contient trop de protéines non hydrolysées/insolubles, trop de minéraux, fréquemment trop de métaux lourds (cadmium et arsenic notamment), et potentiellement trop de contaminants (chlorates, nitrates,...).
d- séparation centrifuge réalisée à un pH₁ compris entre 6 et 9, de préférence, pH₁ est compris entre 7 et 8, et à une température comprise entre 15 et 85°C, de préférence entre 50 et 60°C et encore préférentiellement entre 53 et 57°C ;
   Cette étape permet de réduire fortement la teneur en protéines non hydrolysées/insolubles et de diminuer les teneurs en métaux lourds (**Exemple 2**, notamment tableau 4) ; elle peut être réalisée dans une certaine gamme de concentration, de pH et de température mais les conditions décrites dans cette invention constituent un optimum permettant de garantir la qualité produit. Utilisée seule et/ou dans des conditions non optimisées, cette étape de décantation centrifuge ne permet pas d'obtenir un produit adapté à l'alimentation infantile.
e- nanofiltration du surnageant obtenu à l'étape d, préalablement ajusté à un pH₂ compris entre 5 et 7, de préférence, pH₂ est compris entre 5,5 et 6,5 ;
   Cette étape permet d'éliminer une partie des minéraux ainsi que certains contaminants. La technologie de filtration membranaire est sélectionnée de manière à concentrer les peptides issus de protéines végétales générés par hydrolyse enzymatique tout en permettant l'élimination des minéraux, notamment monovalents, et des contaminants.
   La membrane utilisée pour la nanofiltration a un seuil de coupure compris entre 150 et 250 Da, et peut être conduite telle que décrite dans les **Exemples 3 et 4.**
   Selon un mode de réalisation particulier, la membrane de nanofiltration est composée de polypiperazine amide (PES).
   Il a été découvert que le choix du pH pour la mise en œuvre de cette étape est déterminant pour la capacité de déminéralisation et de décontamination ; en effet, le pH auquel est réalisée l'étape de nanofiltration permet d'éliminer préférentiellement les minéraux (pour pH ≤ 6) ou les contaminants (pour pH ≥ 7). Il est donc possible d'ajuster le procédé selon les caractéristiques de la solution de protéines végétales hydrolysées pour atteindre les spécifications souhaitées.
   A la suite de l'étape e, le procédé selon l'invention comprend une des deux étapes f (diafiltration) ou g (électrodialyse) suivantes :
f- diafiltration du produit issu de l'étape e avec la membrane de nanofiltration utilisée à l'étape e à un pH₃ compris entre 5 et 7, de préférence, pH₃ entre 5,5 et 6,5 ;
   Cette étape permet de parfaire l'élimination des minéraux et de certains contaminants.
   Comme pour la nanofiltration, le pH auquel est réalisée l'étape de diafiltration permet d'éliminer préférentiellement les minéraux (pour pH ≤ 6) ou les contaminants (pour pH ≥ 7). Là encore, il est donc possible d'ajuster le procédé selon les caractéristiques de la solution de protéines végétales pour atteindre les spécifications souhaitées.
g- électrodialyse du rétentat obtenu à l'étape e ;
   L'électrodialyse est une technologie classique, bien connue de l'homme du métier ; un exemple de mise en œuvre d'une telle étape est décrite à l'**Exemple 5.**
h- optionnellement, concentration supplémentaire et/ou pasteurisation et/ou séchage de la solution obtenue.

Le produit préparé avec le procédé selon l'invention, dont un exemple de mise en œuvre est décrit dans l'**Exemple 6,** consiste en un hydrolysat de protéines végétales (sous forme liquide ou de poudre) obtenu par séparation centrifuge dans des conditions optimales puis par nanofiltration et diafiltration dans des conditions optimales, est également un objet de la présente invention ; ce produit présente l'avantage d'avoir des caractéristiques (notamment, teneurs en chlorate, nitrates et métaux lourds) adaptées à l'alimentation infantile, en particulier, leurs teneurs en métaux lourds sont inférieures aux seuils réglementaires sur le produit infantile et leurs teneurs en contaminants (nitrates, chlorates,...) sont réduites.

Optionnellement, ce précédé comprend en outre une étape de traitement du rétentat sur une résine cationique échangeuse d'ions ; un exemple de mise en œuvre d'une telle étape est illustré à l**'Exemple 8.** Cette étape optionnelle permet de réduire la teneur en cadmium dans l'hydrolysat.

Selon un mode de réalisation particulier, la résine cationique échangeuse d'ions est composée d'acide iminodiacetique.

Cette étape de traitement du rétentat sur une résine cationique échangeuse d'ions peut être mise en œuvre juste après l'étape d ou juste après l'étape e que cette étape e soit suivie de l'étape f ou de l'étape g.

De préférence, cette étape de traitement sur résine cationique échangeuse d'ions est mise en œuvre lorsque le procédé selon l'invention comprend une étape d'homogénéisation.

Selon un autre de ses objets, la présente invention se rapporte à un hydrolysat de protéines végétales, en particulier, de riz, de pois ou de soja, de préférence de riz, susceptible d'être obtenu par le procédé selon l'invention.

Selon l'invention, l'hydrolysat de protéines végétales est tel qu'il contient des protéines (matière azotée totale) à une teneur supérieure ou égale à 80%, et plus préférentiellement, supérieure ou égale à 90% en poids par rapport au poids total de matière sèche et qu'il contient une fraction de protéines hydrolysées/solubles à une teneur supérieure ou égale à 90% en poids par rapport au poids de protéines (matière azotée totale).

Selon un autre mode de réalisation de l'invention qui peut être combiné au précédent, l'hydrolysat de protéines végétales selon l'invention est tel qu'il contient :
- une teneur en chlorates inférieure ou égale à 0,35 mg/kg MS (matière sèche), de préférence inférieure ou égale à 0,20 mg/kg MS, encore préférentiellement inférieure ou égale à 0,10 mg/kg MS ; et/ou
- une teneur en nitrates inférieure ou égale à 50 mg/kg MS, de préférence inférieure ou égale à 40 mg/kg MS, de façon encore préférée inférieure ou égale à 30 mg/kg MS, encore préférentiellement inférieure ou égale à 20 mg/kg MS, et tout préférentiellement inférieure ou égale à 10 mg/kg MS ; et/ou
- une teneur en cadmium inférieure ou égale à 50 µg/kg MS, de préférence inférieure ou égale à 40 µg/kg MS, de façon encore préférée inférieure ou égale à 30 µg/kg MS. L' hydrolysat de protéines de riz selon l'invention se caractérise par la composition suivante :

| **Caractéristiques** | **Unité** | **Hydrolysat de protéines végétales selon l'invention** |
|---|---|---|
| Protéines/matière azotée totale (N × 6,25) | mg/100 g MS | > 60, de préférence >80 |
| Protéines non hydrolysées/insolubles | % de protéines/matière azoté totale | < 10 |
| Sodium | mg/100 g MS | < 1200 |
| Potassium | mg/100 g MS | < 1500 |
| Chlorure | mg/100 g MS | < 1500 |
| Arsenic inorganique | µg/kg MS | < 50 |
| Cadmium | µg/kg MS | < 50 |
| Plomb | µg/kg MS | < 50 |
| Mercure | µg/kg MS | < 50 |
| Nitrates | mg/kg MS | < 50 |
| Chlorates | mg/kg MS | < 0,35 |

| | | |
|---|---|---|
| *MS : matière sèche* | | |

La présente invention se rapporte encore à l'utilisation de l'hydrolysat de protéines végétales selon l'invention pour la fabrication de produits alimentaires, en particulier de préparations destinées à l'alimentation infantile telles que des préparations pour nourrissons ou des préparations de suite dans lesquelles les protéines végétales se substituent aux protéines laitières ; à titre indicatif, ce type de formulation comprend généralement entre 10 et 30%, de préférence entre 15 et 20%, en poids d'hydrolysat de protéines végétales, dont la teneur en protéines (matière azotée totale) est supérieure à 60%, de préférence supérieure à 80% en poids, par rapport au poids total de la formulation.

La présente invention se rapporte à une préparation alimentaire pour nourrisson et enfant de bas âge tel que dessert comprenant l'hydrolysat de protéines végétales selon l'invention.

### Exemples

### Exemple 1 : Protéines de riz hydrolysées

480 kg de concentré de protéines de riz à 80% de protéine par rapport à l'extrait sec, sont mélangés à 2720 kg d'eau pour obtenir une solution à 12% de protéines de riz. 20 L de NaOH 30% sont ajoutées pour ajuster le pH à 7,5. L'hydrolyse enzymatique est démarrée par un ajout de 1,28 g d'enzyme/100 g de MAT d'Alcalase 1.5 MG à la solution. Durant cette phase d'hydrolyse réalisée à une température constante de 55 °C, 17 L de KOH à 34% sont ajoutés de manière à maintenir le pH à 7,5 ± 0,1. Après 2 h d'hydrolyse, 11 L d'HCl à 33% sont ajoutés de manière à réduire le pH à 6,5. L'enzyme est inactivée par un traitement thermique de la solution à 85°C pendant 10 minutes. Les caractéristiques de la solution/suspension ainsi obtenue sont détaillées dans le tableau ci-dessous.

**Tableau 2 : Composition des protéines de riz hydrolysées obtenu selon le procédé décrit dans l'exemple 1**

| **Caractéristiques** | **Unité** | **Limites visées** | **Valeurs obtenues** |
|---|---|---|---|
| Protéines non hydrolysées/insolubles | % (poids/poids) | < 10 | 60 |
| Sodium | mg/100 g MS | < 1200 | 1607 |
| Potassium | mg/100 g MS | < 1500 | 964 |
| Chlorure | mg/100 g MS | < 1500 | 2220 |
| Arsenic inorganique | µg/kg MS | < 50 | < 50 |
| Cadmium | µg/kg MS | < 50 | 122 |
| Plomb | µg/kg MS | < 50 | 76 |
| Mercure | µg/kg MS | < 50 | 31 |

### Exemple 2 : Traitement par centrifugation

Une solution/suspension de protéines de riz hydrolysées est préparée comme décrit dans l'Exemple 1. Cette solution/suspension est fractionnée sur un décanteur centrifuge à pH 7 et à 60°C pour éliminer une partie des protéines non hydrolysées/insolubles.

**Tableau 3 : Composition en fraction hydrolysée et métaux lourds des protéines de riz hydrolysées obtenues selon le procédé décrit dans l'exemple 2**

| **Caractéristiques** | **Unité** | **Limites visées** | **Avant séparation centrifuge** | **Après séparation centrifuge** |
|---|---|---|---|---|
| Protéines non hydrolysées/insolubles | % (poids/poids) | < 10 | 60 | 10 |
| Arsenic inorganique | µg/kg MS | < 50 | < 50 | < 50 |
| Cadmium | µg/kg MS | < 50 | 122 | 16 |
| Plomb | µg/kg MS | < 50 | 76 | <30 |
| Mercure | µg/kg MS | < 50 | 31 | 16 |

Il a été découvert que le pH de séparation centrifuge a un impact majeur sur les rendements de récupération de matière protéique dans le surnageant.

**Tableau 4 : Concentration en matière azoté du surnageant issu de la séparation centrifuge en fonction du pH**

| **pH séparation centrifuge** | **Matière azotée totaledu surnageant (g/kg)** |
|---|---|
| 5,5 | 61,8 |
| 6,2 | 64,8 |
| 6,7 | 65,7 |
| 7,2 | 67,9 |

### Exemple 3 : Traitement par nanofiltration et diafiltration

Une solution de protéines hydrolysées traitée par séparation centrifuge est préparée comme décrit dans l'exemple 2. Cette solution est traitée par nanofiltration à seuil de coupure de 200 Da puis diafiltration du rétentat avec de l'eau à différents pH sur des membranes de nanofiltration pour éliminer certains contaminants.

**Tableau 5 : Composition en nitrates et chlorates des protéines de riz hydrolysées obtenues selon le procédé décrit dans l'exemple 3**

| **Caractéristiques** | **Unité** | **Après séparation centrifuge** | **Après Nanofiltration et Diafiltration au pH 7,0** | **Après Nanofiltration et Diafiltration au pH 6,0** |
|---|---|---|---|---|
| Nitrates | mg/kg MS | 362 | < 10 | < 10 |
| Chlorates | mg/kg MS | 1,5 | 0,26 | 0,31 |

### Exemple 4 : Traitement par nanofiltration et diafiltration

Une solution de protéines hydrolysées traitée par séparation centrifuge est préparée comme décrit dans l'exemple 2. Cette solution est traitée par nanofiltration à seuil de coupure de 200 Da puis diafiltration du rétentat avec de l'eau à différents pH sur des membranes de nanofiltration pour éliminer des minéraux notamment monovalents.

**Tableau 6 : Composition en minéraux des protéines de riz hydrolysées obtenues selon le procédé décrit dans l'exemple 4**

| **Caractéristiques** | **Unité** | **Après séparation centrifuge** | **Après Nanofiltration et Diafiltration au pH 7,0** | **Après Nanofiltration et Diafiltration au pH 6,0** |
|---|---|---|---|---|
| Sodium | mg/100 g MS | 3096 | 1548 | 1076 |
| Potassium | mg/100 g MS | 1879 | 1094 | 848 |
| Chlorure | mg/100 g MS | 4210 | 580 | 853 |

### Exemple 5 : Traitement par nanofiltration et électrodialyse

Une solution de protéines hydrolysées traitée par séparation centrifuge est préparée comme décrit dans l'exemple 2 avec un autre lot de protéines de riz. Cette solution est traitée par nanofiltration (seuil de coupure 200 Da) puis électrodialyse du rétentat. L'électrodialyse a été réalisée sur un outil pilote MEGA modèle P EDR-Y/50 sur 100 L de solution à un pH de 6,7, à 13°C et à un débit de 700 L/h. La conductivité de la solution a été abaissée de 10,8 mS/cm à 2,8 mS/cm.

**Tableau 7 : Composition en minéraux des protéines de riz hydrolysées obtenues selon le procédé décrit dans l'exemple 5**

| **Caractéristiques** | **Unité** | **Après Nanofiltration** | **Après Nanofiltration et Electrodialyse** |
|---|---|---|---|
| Sodium | mg/100 g MS | 1928 | 1173 |
| Potassium | mg/100 g MS | 1420 | 732 |
| Chlorure | mg/100 g MS | 2929 | 1194 |

### Exemple 6 : Analyse d'un hydrolysat obtenu après traitement par séparation centrifuge, nanofiltration et diafiltration

Une solution de protéines hydrolysées traitée par séparation centrifuge est préparée comme décrit dans l'exemple 2. Cette solution est traitée par nanofiltration (seuil de coupure 200 Da) à pH 6,0 puis diafiltration du rétentat avec de l'eau à pH 6,0 sur des membranes de nanofiltration pour éliminer des minéraux.

**Tableau 8: Composition globale des protéines de riz hydrolysées obtenues selon le procédé décrit dans l'exemple 6**

| **Caractéristiques** | **Unité** | **Limites visées** | **Solution/suspension de protéines végétales hydrolysées** | **Après traitement par séparation centrifuge, nanofiltration et diafiltration** |
|---|---|---|---|---|
| Protéines/Matière azotée totale (N × 6,25) | g/100 g MS | >60, de préférence > 80 | 81,0 | 83,7 |
| Protéines non hydrolysées | % (poids/poids) | < 10 | 60 | 3,6 |
| Sodium | mg/100 g MS | < 1200 | 1666 | 970 |
| Potassium | mg/100 g MS | < 1500 | 1072 | 582 |
| Chlorure | mg/100 g MS | < 1500 | 2937 | 370 |
| Arsenic inorganique | µg/kg MS | < 50 | < 50 | < 50 |
| Cadmium | µg/kg MS | < 50 | 85 | 23 |
| Plomb | µg/kg MS | < 50 | 102 | < 30 |
| Mercure | µg/kg MS | < 50 | 29 | < 10 |
| Nitrates | mg/kg MS | < 50 | N.D. | < 10 |
| Chlorates | mg/kg MS | < 0,35 | N.D. | 0,31 |

Il ressort de ce tableau que l'hydrolysat de protéines de riz selon l'invention présente une composition avantageuse par rapport aux teneurs maximales en contaminants autorisées par la réglementation ; cet hydrolysat est en conséquence parfaitement adapté à une utilisation en nutrition infantile.

### Exemple 7 : Traitement par homogénéisation de la solution avant hydrolyse

Un essai a été réalisé en incluant une étape d'homogénéisation sur un homogénéisateur GEA Niro Soavi Panda 1000 à 200 bars et 50°C sur une seule tête sur la solution de concentré de protéines de riz. Cette solution a été hydrolysée comme décrit dans l'exemple 1 mais avec un pH de 6,0 pour la séparation centrifuge. Un témoin non homogénéisé a été aussi hydrolysé dans les mêmes conditions.

**Tableau 9 : Teneur en matière azotée du surnageant**

| | Témoin - Solution hydrolysée obtenue **sans** homogénéisation de la solution initiale | Solution hydrolysée obtenue **avec** homogénéisation de la solution initiale |
|---|---|---|
| Protéines/Matière azotée totale du surnageant (N × 6,25) (g/kg) | 62,4 | 64,8 |

### Exemple 8 : Traitement par résines cationiques d'une solution hydrolysée

L'utilisation de procédé de traitement mécanique du concentré de protéines de riz avant hydrolyse tel que décrit dans l'Exemple 7 peut détériorer la décontamination en métaux lourds, en cadmium notamment. Il a été découvert qu'il était possible d'appliquer un traitement par des résines cationiques pour réduire la contamination en cadmium d'une solution hydrolysée présentant une teneur anormalement élevé en cadmium.

Cette étape est rendue possible par la faible teneur en protéines insolubles obtenues avec notre invention. Une solution de protéines de riz hydrolysées avec une faible teneur en protéines non hydrolysées mais avec une teneur anormalement élevée en cadmium a été traitée sur une colonne contenant 25 mL (BV soit le volume de lit) de la résine Amberlite IRC 748 sous forme sodium. La solution a été passée à un débit de 5 BV/heure à 20°C pour un total de 30 BV traité.

**Tableau 10 : Teneur en cadmium**

| | Solution hydrolysée à teneur anormalement élevée en cadmium | Solution hydrolysée à teneur anormalement élevée en cadmium traitée par résine cationique |
|---|---|---|
| Teneur en cadmium (µg/kg MS) | 90 | 22 |

### Exemple 9 : Préparation pour nourrissons à base de protéines de riz hydrolysées

Les protéines de riz hydrolysées préparées comme dans l'Exemple 6, séchées ou non, peuvent être utilisées dans des préparations destinées à l'alimentation infantiles telles que des préparations pour nourrissons ou des préparations de suite.

Un exemple de composition d'une préparation pour nourrissons comprenant 14,4% en poids de protéines de riz hydrolysées obtenues selon l'Exemple 6 est décrit dans le Tableau 11.

La préparation infantile préparée avec l'hydrolysat décrit dans l'invention bénéficie des avantages en termes de teneurs en minéraux et contaminants liés à cet hydrolysat. Par ailleurs, le profil minéral obtenu grâce au procédé mis en œuvre facilitera la conduite du procédé de préparation de la préparation infantile.

**Tableau 11 : Composition nutritionnelle d'une préparation pour nourrissons 1^{er} âge pour enfant en poudre comprenant des protéines de riz hydrolysées**

| | unité | dans 100 g de poudre |
|---|---|---|
| **ENERGIE** | kcal | 504 |
| | kJ | 2111 |
| **PROTEINES** | g | 11,5 |
| **LIPIDES** | g | 25,0 |
| MCT | g | 7,8 |
| ACIDE LINOLEIQUE | mg | 4220 |
| ACIDE A-LINOLENIQUE | mg | 405 |
| ARA | mg | 138 |
| DHA | mg | 125 |
| **GLUCIDES** | g | 57,7 |
| MALTODEXTRINE | g | 45,7 |
| AMIDON | g | 12,0 |

| **MINERAUX** | | |
|---|---|---|
| SODIUM | mg | 245 |
| POTASSIUM | mg | 470 |
| CHLORINE | mg | 365 |
| CALCIUM | mg | 520 |
| PHOSPHORE | mg | 300 |
| FER | mg | 5,5 |
| MAGNESIUM | mg | 55 |
| ZINC | mg | 5,0 |
| CUIVRE | µg | 340 |
| IODE | µg | 120 |
| MANGANESE | µg | 100 |
| SELENIUM | µg | 20,0 |
| CHROME | µg | 25 |
| MOLYBDENE | µg | 35 |
| FLUOR | µg | < 1000 |

| **VITAMINES** | | |
|---|---|---|
| VITAMINE A | µg | 550 |
| VITAMINE D | µg | 12,5 |
| VITAMINE E | mg | 12,0 |
| VITAMINE K | µg | 45 |
| VITAMINE B1 | µg | 550 |
| VITAMINE B2 | µg | 800 |
| VITAMINE B6 | µg | 450 |
| VITAMINE B12 | µg | 1,2 |
| VITAMINE C | mg | 65 |
| ACIDE FOLIQUE | µg | 90 |
| ACIDE PANTOTHENIQUE | mg | 3,1 |
| NIACINE | mg | 4,8 |
| BIOTINE | µg | 11 |

| **AUTRES NUTRIMENTS** | | |
|---|---|---|
| CHOLINE | mg | 150 |
| TAURINE | mg | 30 |
| INOSITOL | mg | 35 |
| L-CARNITINE | mg | 11 |
| NUCLEOTIDES | mg | 19,6 |

### Exemple 10 : Dessert pour nourrisson et enfant de bas âge à base de protéines de riz hydrolysées

Les protéines de riz hydrolysées préparés comme dans l'Exemple 6 peuvent être utilisés dans la formulation de dessert en poudre (reconstitués à 18,6%) destinés aux pour nourrisson et enfant de bas âge. Cette préparation alimentaire contient des matodextrines, des amidons, des huiles végétales et de nombreux ingrédients nutritionnels. Un dessert pour enfant préparé avec l'hydrolysat décrit dans l'invention bénéficiera des avantages en termes de teneurs en minéraux et contaminants liés à cet hydrolysat.

Un exemple de composition du type dessert pour nourrisson et enfant en bas âge comprenant 10,1% en poids de protéines de riz hydrolysées obtenues selon l'Exemple 6 est décrit dans le Tableau 12.

**Tableau 12 : Composition nutritionnelle d'un dessert pour enfant en poudre comprenant des protéines de riz hydrolysées**

| | UNITS | 100 g POWDER |
|---|---|---|
| **ENERGIE** | kcal | 446 |
| | kJ | 1880 |
| **PROTEINES** | g | 8,1 |
| **LIPIDES** | g | 12,7 |
| MCT | g | 3,9 |
| ACIDE LINOLEIQUE | mg | 1676 |
| ACIDE A-LINOLENIQUE | mg | 146 |
| **GLUCIDES** | g | 74,9 |
| MALTODEXTRINE | g | 27,0 |
| AMIDON | g | 33,9 |

| **MINERAUX** | | |
|---|---|---|
| SODIUM | mg | 150 |
| POTASSIUM | mg | 358 |
| CHLORINE | mg | 289 |
| CALCIUM | mg | 538 |
| PHOSPHORE | mg | 324 |
| FER | mg | 4,33 |
| MAGNESIUM | mg | 28,9 |
| ZINC | mg | 2,31 |
| CUIVRE | µg | 190 |
| IODE | µg | 57,7 |
| MANGANESE | µg | 86,6 |
| SELENIUM | µg | 5,77 |
| CHROME | µg | 11,5 |
| MOLYBDENE | µg | 17,3 |
| FLUOR | µg | < 892 |

| **VITAMINES** | | |
|---|---|---|
| VITAMINE A | µg | 260 |
| VITAMINE D | µg | 4,33 |
| VITAMINE E | mg | 5,77 |
| VITAMINE K | µg | 24,2 |
| VITAMINE B1 | µg | 300 |
| VITAMINE B2 | µg | 358 |
| VITAMINE B6 | µg | 242 |
| VITAMINE B12 | µg | 0,58 |
| VITAMINE C | mg | 40,4 |
| ACIDE FOLIQUE | µg | 34,6 |
| ACIDE PANTOTHENIQUE | mg | 1,85 |
| NIACINE | mg | 2,89 |
| BIOTINE | µg | 6,92 |

| **AUTRES NUTRIMENTS** | | |
|---|---|---|
| CHOLINE | mg | 14,4 |
| TAURINE | mg | 28,9 |
| INOSITOL | mg | 19,0 |
| L-CARNITINE | mg | 5,77 |
| NUCLEOTIDES | mg | 11,7 |

### Exemple 11 : Comparaison avec un procédé comprenant des étapes de lavages des protéines de riz et sans maintien de pH au cours de l'hydrolyse

Une solution de protéines de riz a été préparée par mélange de 171 g de poudre de concentré de protéines de riz avec 2829 g d'eau et laissée en réhydratation 30 min. Cette solution a été divisée en 2 fractions équivalente de 1500 g chacune. Un procédé différent a été appliqué à chaque fraction.

La première fraction est traitée selon le procédé de la présente invention : le pH de la solution chauffée à 55°C a été ajusté à 7.68 par ajout de 3.2 g de solution de NaOH à 30%. Une hydrolyse de 4h à 55°C a été réalisée par ajout de 1,37 g d'Alcalase 1.5 MG avec maintien du pH à 7,50 par ajout de KOH à 34% (8,1 g au total). Après hydrolyse, l'enzyme a été inactivée par traitement thermique à 85°C pendant 30 min. Ensuite, une étape de centrifugation (5 min, 2300 *g*) a été réalisée pour séparer le surnageant (1309 g) riche en peptides et le culot (191 g) riche en protéines non hydrolysées. Cela permet d'estimer le rendement du procédé (matière azoté récupérée dans le surnageant / matière azoté mise en œuvre).

Pour la 2^{ème} fraction, le pH de la solution à 20°C a été ajusté à 3,59 par ajout de 2,7 g de solution de HCl à 33%. Une première étape de séparation par centrifugation (= lavage 1) a été réalisé (5 min, 2300 g) sur la solution chauffée à 65°C. Les 1216.8 g de surnageant obtenus sont considérés comme une perte. Les 283,2 g de culot obtenus ont été mélangés avec 1216.8 g d'eau pour obtenir de nouveau 1500 g de solution. Le pH de cette nouvelle solution chauffée à 66°C a été ajusté à 7.32 par ajout de 6,0 g de KOH à 34%. Une deuxième étape de séparation par centrifugation (= lavage 2) a été réalisé (5 min, 2300 *g*)*.* Les 1194 g de surnageant obtenus sont considérés comme une perte. Les 306 g de culot obtenus ont été mélangés avec 1194 g d'eau pour obtenir de nouveau 1500 g de solution. Le pH de cette nouvelle solution chauffée à 60°C a été ajusté à 7,60 par ajout de 2,3 g de solution de NaOH à 30%. Une hydrolyse de 4h à 55°C a été réalisée par ajout de 1,37 g d'Alcalase 1.5 MG sans maintien du pH (pH final = 6,08). Après hydrolyse, l'enzyme a été inactivée par traitement thermique à 85°C pendant 30 min. Ensuite, une étape de centrifugation (5 min, 2300 *g*) a été réalisée pour séparer le surnageant (1203 g) riche en peptides et le culot (297 g).

**Tableau 13 : Résultats - rendement et caractéristiques du surnageant après hydrolyse**

| **Valeur** | **Unité** | **Cible** | **Procédé selon la présente invention** | **Procédé avec lavages et sans maintien de pH au cours de l'hydrolyse** |
|---|---|---|---|---|
| Perte sur le 1er lavage | % des protéines/ matière azotée mises en œuvre | Min | - | 0,6% |
| Perte sur le 2ème lavage | | Min | - | 2,8% |
| Perte sur la séparation solide / liquide | | Min | 43,8% | 64,7% |
| Protéines/matière azotée récupérées dans le surnageant final | | Max | 56,2% | 31,9% |
| Protéines/matière azotée totale (N × 6,25) | mg/100 g MS | >60, de préférence > 80 | 83,5 | 84,0 |
| Protéines non hydrolysées/insolubles | % (poids/poids) | < 10 | 5,6% | 4,9% |
| Teneur en Na (mg/100 g d'ES) | mg/100 g MS | < 1200 | 1870 | 1960 |
| Teneur en K (mg/100 g d'ES) | mg/100 g MS | < 1500 | 3270 | 1350 |

Le procédé décrit dans la présente invention conduit à un taux de récupération de la matière azoté dans le surnageant après hydrolyse sensiblement supérieur à un procédé avec lavage et sans ajustement de pH. Les caractéristiques des surnageants obtenus diffèrent essentiellement par une présence accrue de Na et K dans le surnageant obtenu par le procédé selon l'invention, elle est facilement corrigée, dans le procédé de l'invention, par le pilotage optimisé de l'étape de nanofiltration tel que décrit précédemment, notamment dans l'Exemple 5.

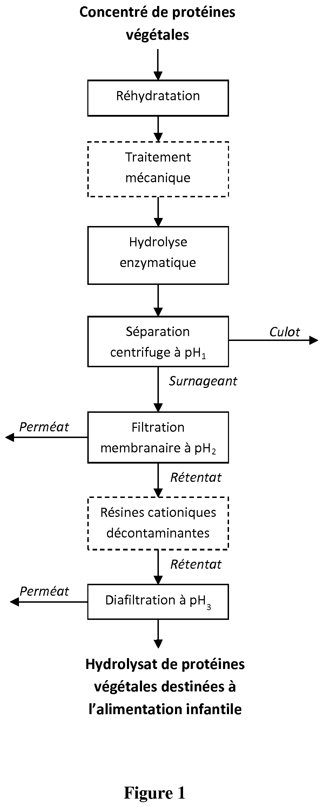

## Revendications

1. Procédé de préparation d'un hydrolysat de protéines végétales consistant en les étapes suivantes :
a- préparation d'une suspension aqueuse de protéines végétales à une concentration comprise entre 2 et 50% (poids/poids) ;
b- optionnellement, homogénéisation de la suspension aqueuse de protéines végétales préparée à l'étape a ;
c- hydrolyse enzymatique de la suspension aqueuse de protéines végétales issue de la ou des étapes précédentes ;
d- séparation centrifuge réalisée à un pH₁ compris entre 6 et 9 et à une température comprise entre 15 et 85°C ;
e- nanofiltration à un seuil de coupure compris entre 150 et 250 Da du surnageant obtenu à l'étape d, préalablement ajusté à un pH₂ compris entre 5 et 7 ;
une étape choisie parmi l'étape f et l'étape g suivantes :
f- diafiltration du produit issu de l'étape e avec la membrane de nanofiltration à un pH₃ compris entre 5 et 7 ; et g- électrodialyse du rétentat obtenu à l'étape e ;
h- optionnellement, concentration supplémentaire et/ou pasteurisation et/ou séchage de la solution obtenue ;
ledit procédé est tel qu'il comprend optionnellement une étape de traitement du rétentat sur une résine cationique échangeuse d'ions mise en œuvre juste après l'étape d ou juste après l'étape e que cette étape e soit suivie de l'étape f ou de l'étape g.

2. Procédé de préparation d'un hydrolysat de protéines végétales selon la revendication 1, **caractérisé en ce qu'**il comprend une étape b d'homogénéisation.

3. Hydrolysat de protéines végétales susceptible d'être obtenu par le procédé selon l'une quelconque des revendications 1 à 2, **caractérisé en ce qu'**il a la composition suivante :
| **Caractéristiques** | **Unité** | **Hydrolysat de protéines végétales selon l'invention** |
|---|---|---|
| Protéines/Matière azotée totale (N × 6,25) | g/100 g de matière sèche | > 80 |
| Protéines non hydrolysées | % de protéines/matière azoté totale | < 10 |
| Sodium | mg/100 g de matière sèche | < 1200 |
| Potassium | mg/100 g de matière sèche | < 1500 |
| Chlorure | mg/100 g de matière sèche | < 1500 |
| Arsenic inorganique | µg/kg de matière sèche | < 50 |
| Cadmium | µg/kg de matière sèche | < 50 |
| Plomb | µg/kg de matière sèche | < 50 |
| Mercure | µg/kg de matière sèche | < 50 |
| Nitrates | mg/kg de matière sèche | < 50 |
| Chlorates | mg/kg de matière sèche | < 0,35 |

4. Hydrolysat de protéines végétales selon la revendication 3, **caractérisé en ce que** lesdites protéines végétales proviennent de riz, de pois ou de soja.

5. Utilisation de l'hydrolysat de protéines végétales selon l'une quelconque des revendications 3 à 4 pour la fabrication de préparation alimentaire.

6. Préparation alimentaire comprenant un hydrolysat de protéines végétales selon l'une quelconque des revendications 3 à 5.

7. Préparation alimentaire selon la revendication 6, **caractérisée en ce qu'**il s'agit d'une préparation infantile pour nourrissons ou de suite et **en ce qu'**elle contient entre 10 et 30% en poids dudit hydrolysat.

## Patentansprüche

1. Verfahren zur Zubereitung eines Hydrolysats aus Pflanzenproteinen, das aus den folgenden Schritten besteht:
a- Zubereiten einer wässrigen Suspension aus Pflanzenproteinen in einer Konzentration, die zwischen 2 und 50% (Gewicht/Gewicht) beträgt;
b- optional Homogenisieren der in Schritt a zubereiteten wässrigen Suspension aus Pflanzenproteinen;
c- enzymatische Hydrolyse der aus dem oder den vorstehenden Schritten stammenden wässrigen Suspension aus Pflanzenproteinen;
d- Zentrifugalabscheidung, die bei einem pH₁ realisiert wird, der zwischen 6 und 9 beträgt, und bei einer Temperatur, die zwischen 15 und 85 °C beträgt;
e- Nanofilterung mit einer Ausschlussgrenze, die zwischen 150 und 250 Da beträgt, des in Schritt d erhaltenen Überstandes, vorab auf einen pH₂ angepasst, der zwischen 5 und 7 beträgt;
einen Schritt, der aus dem folgenden Schritt f und dem Schritt g ausgewählt wird:
f- Diafilterung des aus dem Schritt e stammenden Produkts mit der Nanofiltermembran bei einem pH₃, der zwischen 5 und 7 beträgt; und
g- Elektrodialyse des in Schritt e erhaltenen Retentats;
h- optional zusätzliches Konzentrieren und/ oder Pasteurisieren und/ oder Trocknen der erhaltenen Lösung;
wobei das Verfahren dergestalt ist, dass es optional einen Behandlungsschritt des Retentats auf einem kationischen lonentauscherharz umfasst, der unmittelbar nach dem Schritt d oder unmittelbar nach dem Schritt e durchgeführt wird, unabhängig davon, ob auf diesen Schritt e Schritt f oder Schritt g folgt.

2. Verfahren zur Zubereitung eines Hydrolysats aus Pflanzenproteinen nach Anspruch 1, **dadurch gekennzeichnet, dass** es einen Schritt b des Homogenisierens umfasst.

3. Hydrolysat aus Pflanzenproteinen, das aus dem Verfahren nach einem der Ansprüche 1 bis 2 erhalten werden kann, **dadurch gekennzeichnet, dass** es die folgende Zusammensetzung aufweist:
| Merkmale | Einheit | Erfindungsgemäßes Hydrolysat aus Pflanzenproteinen |
|---|---|---|
| Proteine/Gesamtstickstoffsubstanz (N x 6,25) | g/100g Trockensubstanz | > 80 |
| Nicht hydrolisierte Proteine | % Proteine/Gesamtstickstoffsubstanz | < 10 |
| Natrium | mg/100g Trockensubstanz | < 1200 |
| Kalium | mg/100g Trockensubstanz | < 1500 |
| Chlor | mg/100g Trockensubstanz | < 1500 |
| Anorganisches Arsen | µg/kg Trockensubstanz | < 50 |
| Kadmium | µg/kg Trockensubstanz | < 50 |
| Blei | µg/kg Trockensubstanz | < 50 |
| Quecksilber | µg/kg Trockensubstanz | < 50 |
| Nitrate | mg/kg Trockensubstanz | < 50 |
| Chlorate | mg/kg Trockensubstanz | < 0,35 |

4. Hydrolysat aus Pflanzenproteinen nach Anspruch 3, **dadurch gekennzeichnet, dass** die Pflanzenproteine aus Reis, aus Erbsen oder aus Soja kommen.

5. Verwendung des Hydrolysats aus Pflanzenproteinen nach einem der Ansprüche 3 bis 4 zur Herstellung einer Nahrungsmittelzubereitung.

6. Nahrungsmittelzubereitung, umfassend ein Hydrolysat aus Pflanzenproteinen nach einem der Ansprüche 3 bis 5.

7. Nahrungsmittelzubereitung nach Anspruch 6, **dadurch gekennzeichnet, dass** es sich um eine Kinderzubereitung für Säuglinge oder im Anschluss handelt, und dadurch, dass sie zwischen 10 und 30 Gew.-% des Hydrolysats enthält.

## Claims

1. Method for the preparation of a vegetable protein hydrolysate consisting of the following steps:
a- preparing an aqueous suspension of vegetable proteins at a concentration between 2 and 50% (weight/weight);
b- optionally, homogenising the aqueous suspension of vegetable proteins prepared in step a;
c- enzymatic hydrolysation of the aqueous suspension of vegetable proteins coming from the preceding step(s);
d- centrifugal separation carried out at a pH₁ between 6 and 9 and at a temperature between 15 and 85°C;
e- nanofiltration at a cut-off threshold between 150 and 250Da of the supernatant obtained in step d, adjusted beforehand to a pH₂ between 5 and 7;
a step chosen from the following step f and step g:
f- diafiltration of the product coming from step e with the nanofiltration membrane at a pH₃ between 5 and 7; and g- electrodialysing the retentate obtained in step e;
h- optionally, additional concentration and/or pasteurisation and/or drying of the solution obtained;
said method is such that it optionally comprises a step of treatment of the retentate on an ion-exchanging cationic resin implemented immediately after step e whether this step e is followed by step f or by step g.

2. Method for the preparation of a vegetable protein hydrolysate according to claim 1, **characterised in that** it comprises a step b of homogenisation.

3. Vegetable protein hydrolysate obtainable by the method according to any one of claims 1 to 2, **characterised in that** it has the following composition:
| **Characteristics** | **Unit** | **Vegetable protein hydrolysate according to the invention** |
|---|---|---|
| Proteins/Total nitrogenous matter (N x 6.25) | g/100g of dry matter | > 80 |
| Non-hydrolysed proteins | % of proteins/total nitrogenous matter | < 10 |
| Sodium | mg/100g of dry matter | < 1200 |
| Potassium | mg/100g of dry matter | < 1500 |
| Chloride | mg/100g of dry matter | < 1500 |
| Inorganic arsenic | µg/kg of dry matter | < 50 |
| Cadmium | µg/kg of dry matter | < 50 |
| Lead | µg/kg of dry matter | < 50 |
| Mercury | µg/kg of dry matter | < 50 |
| Nitrates | mg/kg of dry matter | < 50 |
| Chlorates | mg/kg of dry matter | < 0.35 |

4. Vegetable protein hydrolysate according to claim 3, **characterised in that** said vegetable proteins come from rice, peas or soy.

5. Use of the vegetable protein hydrolysate according to any one of claims 3 to 4 for the manufacture of food preparation.

6. Food preparation comprising a vegetable protein hydrolysate according to any one of claims 3 to 5.

7. Food preparation according to claim 6, **characterised in that** it is an infant formula or follow-on formula and **in that** it contains between 10 and 30% by weight of said hydrolysate.
